## Europäisches Patentamt
## European Patent Office
## Office européen des brevets

(19)

(11) Veröffentlichungsnummer: **0 049 839**
**B1**

(12) **EUROPÄISCHE PATENTSCHRIFT**

(45) Veröffentlichungstag der Patentschrift:
12.06.85

(51) Int. Cl.⁴: **H 02 M 7/757**, H 02 M 5/27, H 02 M 1/08

(21) Anmeldenummer: 81107880.7

(22) Anmeldetag: 03.10.81

(54) Verfahren zum Herbeiführen dynamischer Zündwinkeltreue bei netzgeführten Stromrichtern.

(30) Priorität: 10.10.80 DE 3038246

(43) Veröffentlichungstag der Anmeldung:
21.04.82 Patentblatt 82/16

(45) Bekanntmachung des Hinweises auf die Patenterteilung:
12.06.85 Patentblatt 85/24

(84) Benannte Vertragsstaaten:
AT CH FR GB IT LI NL SE

(56) Entgegenhaltungen:
GB - A - 1 270 111

IEEE TRANSACTIONS ON INDUSTRY APPLICATIONS, vol.IA-8, no.4, Juli/August 1972, New York (US), T.M. HAMBLIN et al.: "Cycloconverter control circuits", Seiten 443 bis 453

(73) Patentinhaber: BROWN, BOVERI & CIE Aktiengesellschaft, Kallstadter Strasse 1, D-6800 Mannheim 31 (DE)

(72) Erfinder: Langlotz, Helmut, Dipl.-Ing., Magnolienstrasse 8, D-6143 Lorsch (DE)

(74) Vertreter: Kempe, Wolfgang, Dr. et al, c/o Brown, Boveri & Cie AG Postfach 351, D-6800 Mannheim 1 (DE)

## Beschreibung

Die Erfindung betrifft ein Verfahren zum Herbeiführen dynamischer Zündwinkeltreue bei netzgeführten Stromrichtern mit Zündsteuergeräten, in denen aus dem Vergleich eines Steuersignals mit periodischen Hilfsspannungen kurze Zündimpulse erzeugt werden, die als Hauptimpulse die jeweils zugehörigen Thyristoren und als Nachimpulse gleichzeitig die jeweils zyklisch vorangehenden Thyristoren zünden.

Bei allen derzeit auf dem Markt erhältlichen Steuersätzen für Thyristorstromrichter werden die Zündimpulse zyklisch gebildet. Hierzu wird eine periodische Hilfsfunktion mit einer meist einstellbaren Schaltschwelle verglichen. Sobald die Hilfsfunktion die Schaltschwelle erreicht, wird ein Zündimpuls erzeugt. Bezüglich der Zündimpulse unterscheidet man zwei prinzipielle Möglichkeiten. Die eine Möglichkeit besteht darin, die Zündimpulse ebenso lang zu machen, wie die Leitphase der Thyristoren. Man bezeichnet sie' dann als Langimpulse. Die Erzeugung solcher Langimpulse und insbesondere ihre Übertragung an die Thyristoren, die im allgemeinen auf hohem Potential liegen, ist jedoch verhältnismässig aufwendig. Die zweite Möglichkeit besteht darin, die Zündimpulse kurz zu machen, d.h. nur gerade so lang, dass die Thyristoren sicher gezündet werden. Erzeugung und Übertragung derartiger Kurzimpulse ist wesentlich einfacher als bei Langimpulsen.

Mit kurzen Zündimpulsen ist es jedoch nicht ohne weiteres möglich, einen Stromrichter anzufahren oder im Lückbetrieb zu betreiben, wenn der Laststrom von mehr als einem Stromrichterhauptzweig geführt wird. Um diesem Missstand abhelfen zu können, werden die Zündimpulse nicht nur dem zugehörigen Thyristor, sondern auch dem zyklisch vorangehenden Thyristor gleichzeitig zugeführt. Dabei bezeichnet man den dem zugehörigen Thyristor zugeführten Zündimpuls als Hauptimpuls, den dem vorangehenden Thyristor zugeführten Zündimpuls als Nachimpuls. Auf diese Weise werden Thyristoren gleichzeitig gezündet, so dass ein die Thyristoren leitfähig haltender Stromfluss zustande kommen kann.

Beim Betrieb von Stromrichtern, die mit derartigen Haupt- und Nachimpulsen gezündet werden, hat es sich gezeigt, dass aus bisher unerklärlichen Gründen Überströme oder gar Sicherungsausfälle zu verzeichnen waren, obwohl alle angeschlossenen Geräte in einwandfreiem Zustand waren. Diese Störungen traten immer dann auf, wenn der Stromrichter sehr schnell in Richtung auf mehr Gleichrichterbetrieb verstellt wurde, d.h. bei Gleichstromantrieben mit EMK-Vorsteuerung und/oder schneller Momentenumkehr, bei Stromrichtern für die Speisung von Gleichstrom-Lichtbogenöfen oder bei Direktumrichtern.

Bisher wurden diese Störungen dadurch beseitigt, dass die sprunghaften Änderungen des Steuersignals für den Betriebszustand des Stromrichters verzögert wurden, z.B. mit Hilfe von RC-Gliedern. Dies ist jedoch zwangsläufig mit einer spürbaren Verschlechterung der Dynamik verbunden; dies insbesondere deshalb, weil die jeweils erforderliche Verzögerung vom vorherigen Betriebszustand, vom jeweiligen dynamischen Vorgang, vom Zeitpunkt des Eintritts des dynamischen Vorgangs sowie von der Breite der Zündimpulse abhängig ist. Um Störungen mit Sicherheit zu vermeiden, musste deshalb die Glättung auf den ungünstigsten Fall ausgerichtet werden.

Eine weitere Möglichkeit, Störungen bei der Zündimpulsbildung zu vermeiden, ist aus IEEE Transactions on Industry Application, vol. IA, no. 4, Juli/August 1972, New York (USA), T.M. Hamblin et al.: «Cycloconverter control circuits», Seiten 443 bis 453, insbesondere Seite 446 und 447 bekannt. Dort wird vorgeschlagen, den Bereich, in dem Hauptimpulse gebildet werden können, von vorneherein auf den natürlichen Kommutierungsbereich zu begrenzen. Hierzu ist eine logische Schaltung vorgesehen, die durchlässig für Zündimpulse im Steuerwinkelbereich von 0° bis 180° ist, jedoch Fehlimpulse im Bereich von 180° bis 360° unterdrückt. Die notwendige logische Schaltung ist jedoch verhältnismässig kompliziert aufgebaut.

Der vorliegenden Erfindung liegt die Aufgabe zugrunde, bei Zündsteuergeräten, in denen kurze Haupt- und Nachimpulse erzeugt werden, die durch fehlende dynamische Zündwinkeltreue entstehenden Störungen in allen Betriebszuständen auf einfache Art und Weise zu beseitigen, ohne die Dynamik zu verschlechtern.

Diese Aufgabe wird dadurch gelöst, dass die Bildung oder Weiterleitung der Nachimpulse dann gesperrt wird, wenn gleichzeitig mehr als ein Hauptimpuls gebildet wird.

Der Erfindung liegt die Erkenntnis zugrunde, dass bei schnellen Änderungen des Betriebszustandes des Stromrichters im Zündsteuergerät gleichzeitig oder praktisch gleichzeitig mehrere Hauptimpulse erzeugt werden. Diese Tatsache allein führt jedoch nicht zu den beobachteten Störungen, da aufgrund der Spannungsverhältnisse an den Thyristoren des Stromrichters immer nur diejenigen Thyristoren angesteuert werden, die zu den richtigen Ausgangsspannungen des Stromrichters führen. Die Störungen sind vielmehr dadurch bedingt, dass diese Hauptimpulse gleichzeitig als Nachimpulse an die jeweils zyklisch vorangehenden Thyristoren geleitet werden, die aufgrund der herrschenden Spannungsverhältnisse dann ebenfalls leitend werden und damit den Stromrichter zu weit vorsteuern oder im Wechselrichterbetrieb gar den angeschlossenen Gleichstromverbraucher kurzschliessen können. Auch treten diese mehrfachen Hauptimpulse und die durch die zugehörigen Nachimpulse verursachten Störungen nicht bei allen schnellen Änderungen des Betriebszustandes des Stromrichters auf, sondern nur dann, wenn der Stromrichter um ein gewisses Mindestmass und/oder zu einem ungünstigen Zeitpunkt in Richtung auf mehr Gleichrichterbetrieb gesteuert wird. Während beim bekannten Stromrichter-Steuerkreis gemäss IEEE Transactions . . . sämtliche Zündimpulse im Steuerwinkelbereich von 180° bis 360° als Fehlimpulse interpretiert und deshalb unterdrückt werden, macht die erfindungsgemässe Lösung von dem Umstand Gebrauch, dass Nachimpulse völlig unnötig sind, wenn mindestens zwei Hauptimpulse gebildet wurden, da diese beiden Hauptimpulse alleine den sofortigen Stromaufbau ermöglichen.

Gemäss einer Weiterbildung der Erfindung wird die Bildung oder Weiterleitung der Nachimpulse dann gesperrt, wenn die Geschwindigkeit, mit der der Stromrichter in Richtung auf mehr Gleichrichterbetrieb gesteuert wird, einen Schwellwert übersteigt. Dieser Schwellwert ist vom jeweiligen Stromrichter und seiner Steuerung abhängig; seine Grösse kann durch einfache Versuche ermittelt werden.

Eine weitere Lösung der erfindungsgemässen Aufgabe besteht darin, dass die Bildung oder Weiterleitung eines Hauptimpulses und des zugehörigen Nachimpulses dann gesperrt wird, wenn für den zyklisch nachfolgenden Thyristor gleichzeitig ein Hauptimpuls gebildet wird. Diese Lösung macht von der Tatsache Gebrauch, dass zwei Zündimpulse in allen Betriebszuständen zum Aufbau eines störungsfreien Stromflusses im Stromrichter ausreichen, unabhängig davon, ob es sich um zwei Hauptimpulse oder um einen Hauptimpuls mit zugehörigem Nachimpuls handelt.

Gemäss einer Weiterbildung der Erfindung werden zur Bildung des Sperrsignals, welches die Bildung oder Weiterleitung der Haupt- bzw. Nachimpulse sperrt, je zwei Hauptimpulse nach den Regeln der Kombinatorik einer UND-Verknüpfung unterzogen.

Gemäss einer Variante zu der vorliegenden Bildung des Sperrsignals werden die Hauptimpulse amplitudenmässig summiert; anschliessend wird die Summe mit einer Schwelle von der Grösse eines Hauptimpulses verglichen. In beiden Fällen wird die Zahl der gleichzeitig auftretenden Hauptimpulse ausgewertet.

Eine Schaltungsanordnung zur Durchführung des erfindungsgemässen Verfahrens enthält im Zündsteuergerät in jedem, einem Thyristor zugeordneten Zündkanal ein ODER-Gatter und in der Verbindung zwischen jedem Zündkanal und dem ODER-Gatter des zyklisch vorangehenden Zündkanals ein UND-Gatter mit Sperreingang; ferner ist jeder Zündkanal nach den Regeln der Kombinatorik mit jedem anderen Zündkanal über ein UND-Gatter verknüpft und die Ausgänge dieser UND-Gatter sind über ein ODER-Gatter mit den zusammengeschalteten Sperreingängen verbunden.

Eine Schaltungsanordnung zur Durchführung des Verfahrens gemäss der zweiten Variante enthält im Zündsteuergerät in jedem einem Thyristor zugeordneten Zündkanal ein ODER-Gatter und in der Verbindung zwischen jedem Zündkanal und dem ODER-Gatter des zyklisch vorangehenden Zündkanals ein UND-Gatter mit Sperreingang; zur Differenzierung des Steuersignals für die Steuerung des Stromrichters ist ein Differenzierglied vorgesehen, dessen Ausgangsgrösse mittels Gleichrichter so geformt wird, dass nur die Werte, die bei einer Steuerung des Stromrichters in Richtung auf mehr Gleichrichterbetrieb auftreten, an den Eingang eines Amplitudenkomparators gelangen; der Ausgang des Komparators ist über einen Impulsformer mit den zusammengeschalteten Sperreingängen verbunden; um die Laufzeit des differenzierten Signals auszugleichen, ist das Steuersignal selbst über ein Verzögerungsglied geführt, bevor es an die eigentlichen Zündimpulsgeneratoren gelangt.

Eine Schaltungsanordnung zur Durchführung des Verfahrens gemäss der dritten Variante enthält im Zündsteuergerät in jedem, einem Thyristor zugeordneten Zündkanal ein ODER-Gatter und in der Verbindung zwischen jedem Zündkanal und dem ODER-Gatter des zyklisch vorangehenden Zündkanals ein UND-Gatter mit Sperreingang; jeder Zündkanal ist an den Eingang eines summierenden Verstärkers geführt; der Ausgang des Verstärkers ist über einen Amplitudenkomparator, dessen Schwelle der Amplitude eines Zündimpulses entspricht, mit den zusammengeschalteten Sperreingängen verbunden.

Bei allen drei Varianten der erfindungsgemässen Schaltung wird die Weiterleitung eines an einem Zündkanal anstehenden Hauptimpulses zu den zyklisch vorangehenden Zündkanälen zur Bildung eines Nachimpulses mit Hilfe eines UND-Gatters dann gesperrt, wenn die Gefahr der Störungen verursachenden Mehrfachimpulsbildung besteht.

Gemäss einer Weiterbildung der erfindungsgemässen Schaltungsanordnungen besitzen die in den Verbindungen zwischen jedem Zündkanal und dem zyklisch vorangehenden Zündkanal liegenden UND-Gatter einen dritten Eingang; ferner sind alle Zündkanäle auf ein ODER-Gatter geführt, dessen Ausgang mit den zusammengeschalteten dritten Eingängen verbunden ist. Mit Hilfe dieser Einrichtung wird sichergestellt, dass Nachimpulse trotz ihrer unterschiedlichen Laufzeiten gegenüber den Hauptimpulsen nur während der Zeitdauer der Hauptimpulse auftreten können.

Anhand der Zeichnung soll die Erfindung in Form von Ausführungsbeispielen näher erläutert werden. Der besseren Überschaubarkeit wegen ist die Überlappung bei Kommutierungsvorgängen hierbei vernachlässigt.

Es zeigen:

Fig. 1a den Verlauf der Spannung am Ausgang eines sechspulsigen Thyristor-Stromrichters in Drehstrombrückenschaltung bei verschiedenen Betriebszuständen,

Fig. 1b Nummer und Leitdauer der stromführenden Thyristoren desselben Stromrichters,

Fig. 1c den Verlauf von Hilfsspannung und Schwellenspannung zur Bildung einer Ausgangsspannung gemäss Fig. 1a anhand des Sinus-Vertikal-Verfahrens,

Fig. 1d Haupt- und Nachimpulse zur Zündung der Thyristoren desselben Stromrichters,

Fig. 1e den Verlauf der Spannung am Ausgang eines sechspulsigen Thyristor-Stromrichters in Drehstrombrückenschaltung bei verschiedenen Betriebszuständen analog Fig. 1a unter Berücksichtigung der erfindungsgemässen Verbesserung,

Fig. 1f Nummer und Leitdauer der stromführenden Thyristoren desselben Stromrichters,

Fig. 1g den Verlauf von Hilfsspannung und Schwellenspannung zur Bildung einer Ausgangsspannung gemäss Fig. 1e anhand des Sinus-Vertikal-Verfahrens,

Fig. 1h Haupt- und Nachimpulse zur Zündung der Thyristoren desselben Stromrichters,

Fig. 2 einen sechspulsigen netzgeführten Stromrichter, an dem die Kurven der Figuren 1a bis 1h erhalten wurden,

Fig. 3 eine Schaltungsanordnung zur Sperrung der Nachimpulse in Abhängigkeit von einem Sperrsignal,

Fig. 4 eine erste Schaltungsanordnung zur Bildung eines Sperrsignals,

Fig. 5 eine zweite Schaltung zur Erzeugung eines Sperrsignals der Nachimpulse,

Fig. 6 eine Schaltung zur Bildung eines Summenimpulses in Abhängigkeit von einem Sperrsignal.

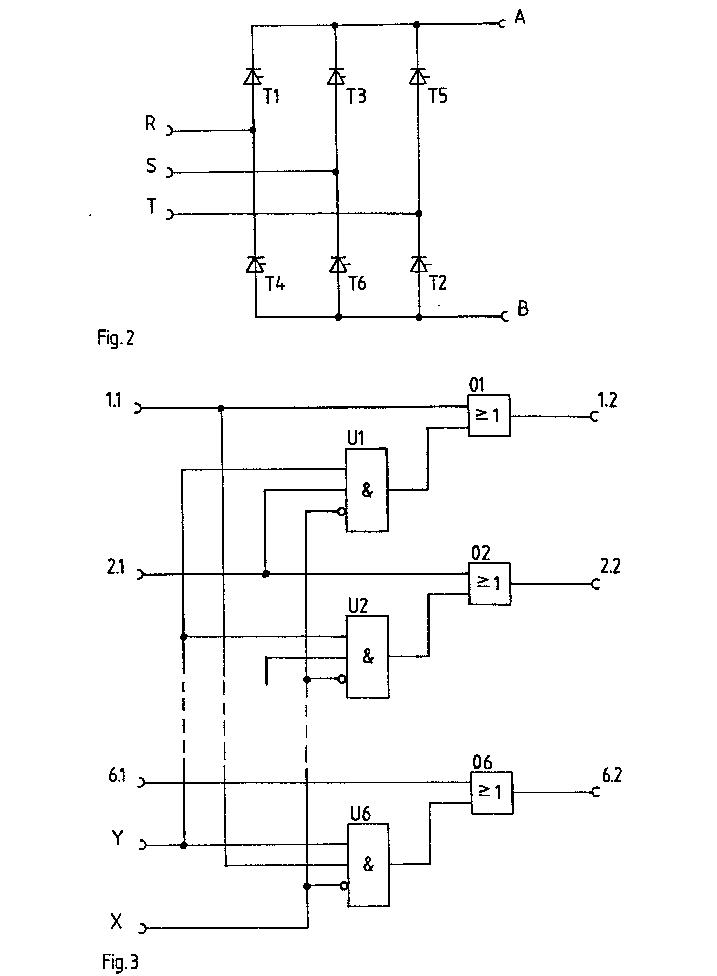

In Fig. 2 erkennt man einen sechspulsigen, netzgeführten Stromrichter mit drei Thyristoren T1, T3, T5 im oberen und drei Thyristoren T4, T6, T2 im unteren Brückenzweig. An den Klemmen, R, S, T wird das Drehstromnetz, an den Klemmen A, B das Gleichstromnetz bzw. der Gleichstromverbraucher angelegt. Die Thyristoren sind so numeriert, wie sie in der natürlichen Reihenfolge nacheinander gezündet werden.

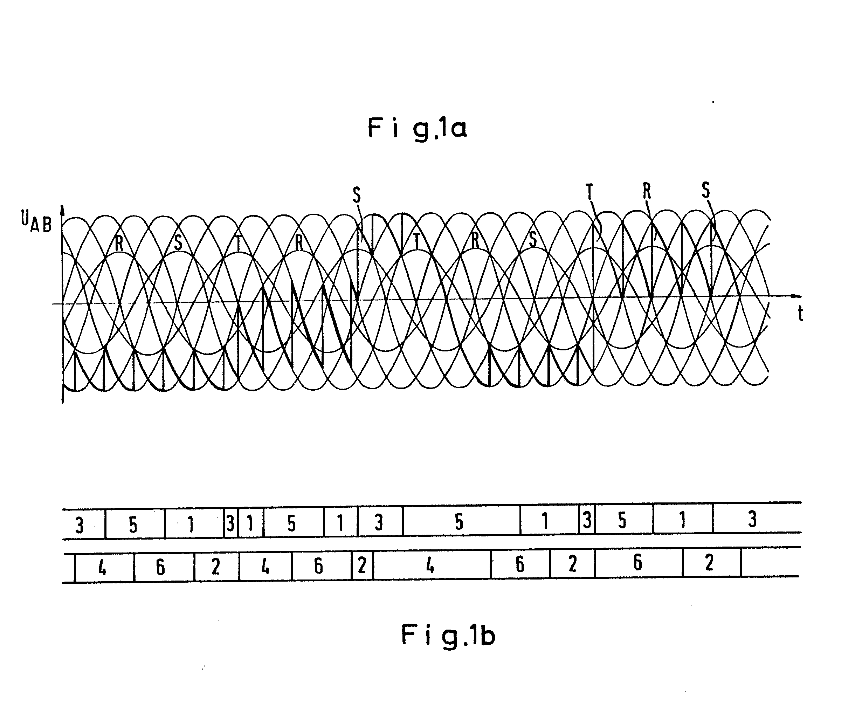

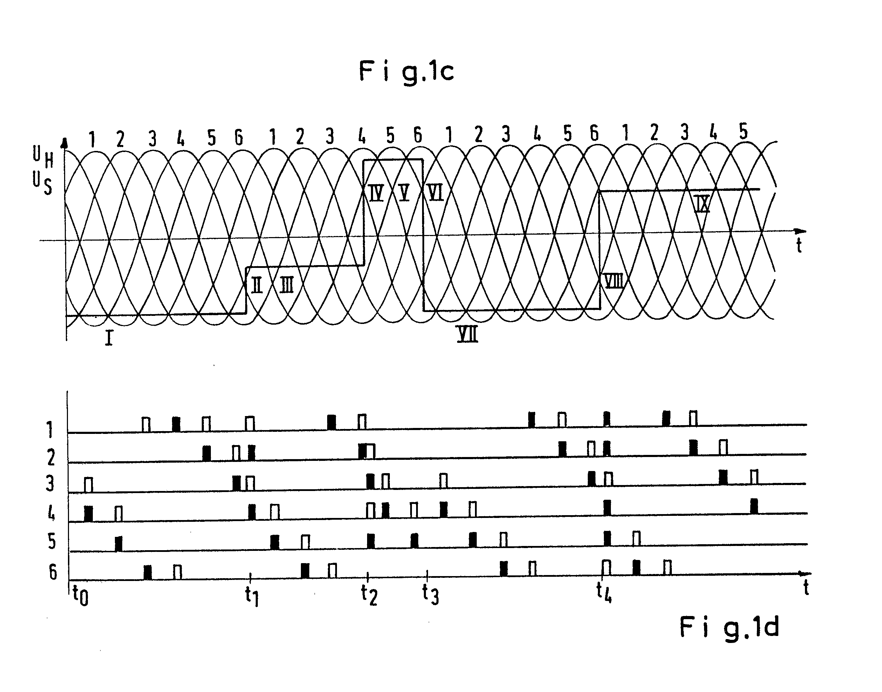

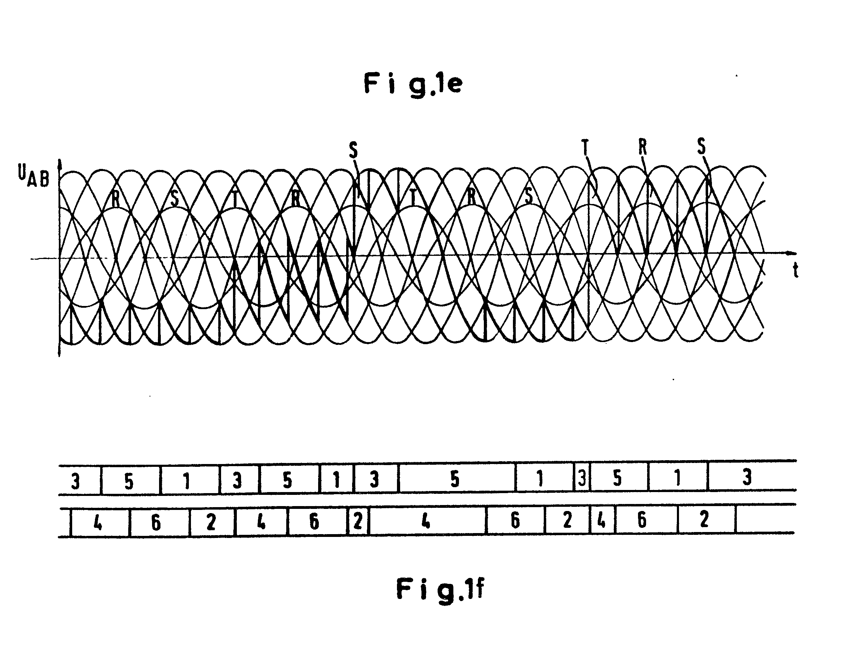

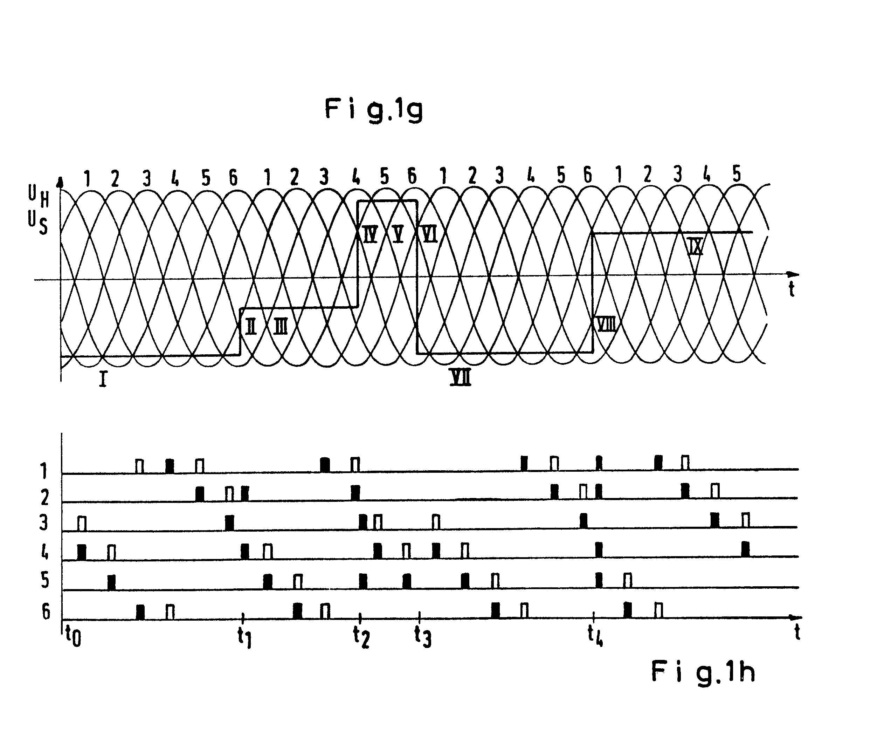

Fig. 1a zeigt als dicke ausgezogene Kurve den Verlauf der Spannung $U_{AB}$ an den Gleichstromklemmen des Stromrichters. Dabei entspricht positive Spannung dem Gleichrichterbetrieb, negative Spannung dem Wechselrichterbetrieb (elektrische Energie wird aus dem Gleichstromnetz in das Drehstromnetz zurückgeliefert). Die dünn ausgezogenen Kurven gegen die Phasenspannungen sowie die verketteten Spannungen wieder, wobei mit R, S, T die Phasenspannungen bezeichnet sind.

Fig. 1b zeigt die Nummer sowie die Leitdauer der Thyristoren des Stromrichters der Fig. 2, die zu einem Spannungsverlauf wie in Fig. 1a führt. Dabei sind die Thyristoren der oberen und der unteren Brückenhälfte getrennt dargestellt.

Fig. 1c zeigt anhand des Sinus-Vertikal-Verfahrens den Verlauf von Hilfsspannung $U_H$ und Schwellenspannung bzw. Steuerspannung $U_S$ zur Bildung der Spannung gemäss Fig. 1a. Man erkennt sechs sinusförmige Hilfsspannungen, je eine für jeden Thyristor, die gegenüber den verketteten Spannungen um 30° elektrisch verschoben sind. Die Steuerspannung $U_S$ ist in mehrere Abschnitte zerlegt, die mehreren Betriebszuständen des Stromrichters entsprechen. Der Abschnitt I entspricht vollem Wechselrichterbetrieb. Im Zeitpunkt $t_1$ springt die Steuerspannung $U_S$ entsprechend dem Kurvenstück II auf einen Wert, der etwa einem Drittel Wechselrichterbetrieb gemäss Kurvenstück III entspricht. Im Zeitpunkt $t_2$ springt die Steuerspannung $U_S$ entsprechend dem Kurvenstück IV auf einen Wert, der vollem Gleichrichterbetrieb gemäss Kurvenstück V entspricht. Im Zeitpunkt $t_3$ springt die Steuerspannung $U_S$ entsprechend Kurvenstück VI auf einen Wert, der vollem Wechselrichterbetrieb entsprechend Kurvenstück VII entspricht. Im Zeitpunkt $t_4$ springt die Steuerspannung $U_S$ gemäss Kurvenstück VIII auf einen Wert, der halbem Gleichrichterbetrieb entsprechend Kurvenstück IX entspricht.

Fig. 1d zeigt die gemäss Fig. 1c durch einen Vergleich zwischen den Hilfsspannungen $U_H$ und der Steuerspannung $U_S$ gebildeten Zündimpulse. Dabei kennzeichnen die geschwärzten Rechtecke die Hauptimpulse, die weissen Rechtecke die Nachimpulse. Man erkennt, dass immer dann, wenn die Steuerspannung $U_S$ in Richtung auf mehr Gleichrichterbetrieb springt – zu den Zeitpunkten $t_1$, $t_2$, $t_4$ – mehr als ein Hauptimpuls und damit auch mehr als ein Nachimpuls gebildet wird. Ein Zündimpuls wird immer dann gebildet, wenn eine der sinusförmigen Hilfsspannungen $U_H$ negativer wird als die momentane Steuerspannung $U_S$. Betrachtet man beispielsweise den Zeitpunkt $t_4$, so sieht man, dass alle sechs Thyristoren gleichzeitig einen Zündimpuls erhalten würden, so dass der Stromrichter kurzzeitig in die Gleichrichtergrenzlage ausgesteuert würde. Betrachtet man beispielsweise den Zeitpunkt $t_1$, so sieht man, dass durch den Nachimpuls auf den Thyristor T1 die Thyristoren T1 und T4 – die im gleichen Brückenzweig liegen – aufgesteuert würden. Im Wechselrichterbetrieb – bei negativer EMK – würde dadurch der Anker einer Gleichstrommaschine kurzgeschlossen, was unweigerlich zum Sicherungsausfall führen würde. Die im Zeitpunkt $t_3$ zusätzlich und unnötig gebildeten Steuerimpulse stören zufällig den Betrieb nicht.

In den Fig. 1e bis 1h sind die gleichen Zeitverläufe entsprechend den Figuren 1a bis 1d unter Berücksichtigung der erfindungsgemässen Verbesserung für den gleichen Zeitverlauf der Steuergleichspannung $U_S$ dargestellt. Man erkennt, dass an den kritischen Zeitpunkten $t_1$ und $t_4$ jetzt keine dynamische Vorsteuerung mehr auftritt. Das Sperren der Nachimpulse z.B. für die Thyristoren T3 und T6 im Zeitpunkt $t_4$ sorgt im Zusammenhang mit den anderen Thyristoren momentan anliegenden Spannungen dafür, dass kein Überstrom auftritt, vielmehr sofort der dem tatsächlichen Momentanwert der Steuergleichspannung entsprechende Aussteuerungszustand eingenommen wird.

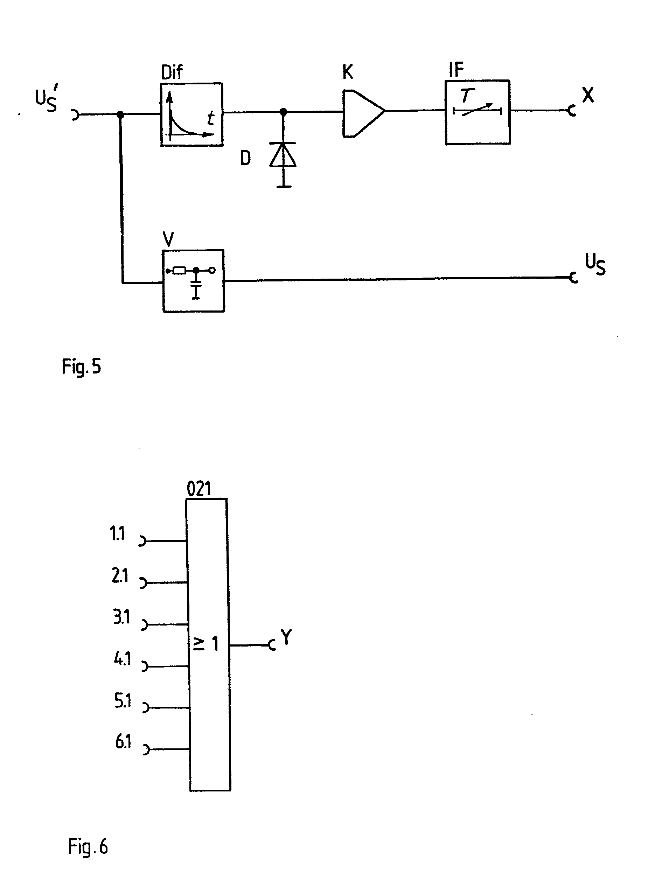

Fig. 3 zeigt eine Schaltungsanordnung zur Bildung von Haupt- und Nachimpulsen, bei dem die Weiterleitung der Nachimpulse durch ein Sperrsignal X gesperrt werden kann. Ein Impuls am Eingang 1.1 erzeugt über das ODER-Gatter 01 einen Hauptimpuls am Ausgang 1.2. Gleichzeitig liegt der Impuls am Eingang des UND-Gatters U6 an. Liegt am Sperreingang des UND-Gatters U6 kein Sperrsignal X an, so wird der Impuls durch das UND-Gatter U6 an den zweiten Eingang des ODER-Gatters 06 geleitet und erscheint als Nachimpuls am Ausgang 6.2 (die Wirkung des Signals Y am dritten Eingang der UND-Gatter U1...U6 wird im Zusammenhang mit Fig. 6 erläutert). Liegt am Sperreingang der UND-Gatter U1...U6 dagegen ein Sperrsignal X, so wird die Weiterleitung der Nachimpulse gesperrt.

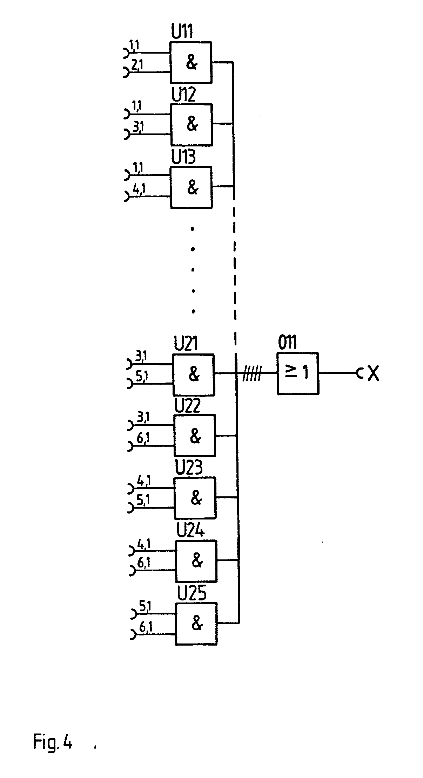

Fig. 4 zeigt eine erste Variante zur Bildung des Sperrsignals X. Man erkennt UND-Gatter U11...U25 mit je zwei Eingängen. Diese Eingänge sind nach den Regeln der Kombinatorik mit den Eingängen der Zündknäle 1.1...6.1 verbunden. Sobald auf den Zündkanälen mehr als ein Zündimpuls gleichzeitig gebildet wird, erscheint am Ausgang wenigstens eines der UND-Gatter U11...U25 ein Ausgangssignal. Die Ausgänge sämtlicher UND-Gatter sind über ein ODER-Gatter 011 zusammengefasst. Der Ausgang dieses ODER-Gatters 011 wird dann mit den zusammengeschalteten Sperreingängen der UND-Gatter U1...U6 verbunden.

Fig. 5 zeigt eine weitere Variante zur Bildung des Sperrsignals X. Hier wird die Steuerung $U_S'$ in einem Differenzierglied Dif differenziert. Das Ausgangssignal wird mit Hilfe einer Diode D so gleichgerichtet, dass nur die Impulse an den Eingang eines Spannungskomparators K geführt werden, die bei einer Änderung der Steuerspannung $U_S'$ in Richtung auf mehr Gleichrichterbetrieb (Kurvenstücke II, IV, VIII in Fig. 1c oder 1g) entstehen. Die Schaltschwelle des Komparators K ist entsprechend den Bedürfnissen des Stromrichters eingestellt. Das Ausgangssignal des Komparators K wird über einen Impulsformer IF geleitet, der daraus Sperrimpulse von definierter Höhe und Zeitdauer bildet. Das Steuersignal $U_S'$ wird gleichzeitig über einen Verzögerer V, beispielsweise ein RC-Glied, geleitet, um die Laufzeit des differenzierten Signals auszugleichen, und dann als Steuerspannung $U_S$ mit den sinusförmigen Hilfspannungen $U_H$ zur Bildung der Zündimpulse verglichen.

Fig. 6 zeigt ein ODER-Gatter 021, dessen Eingänge mit den Zündkanälen 1.1...6.1 verbunden sind. Am Ausgang des ODER-Gatters 021 erscheint immer dann ein Signal Y, wenn an wenigstens einem der Eingänge ein Zündsignal anliegt. Das Signal Y wird an die zusammengeschalteten dritten Eingänge der UND-Gatter U1...U6 der Fig. 4 geführt; es sorgt dafür, dass die Nachimpulsbildung insgesamt mit den Hauptimpulsen so synchronisiert wird, dass nicht durch unterschiedliche Laufzeiten zur Berechnung des Sperrsignals X gegebenenfalls doch noch Fehlzündungen der Stromrichterthyristoren auftreten können.

Versuche mit einer erfindungsgemässen Schaltung an einem Gleichstromumkehrantrieb mit EMK-Vorsteuerung haben ergeben, dass sofort nach der Umschaltpause der Ankerstrom aufgebaut wird, ohne dass es zu irgendwelchen Störungen kommt. Die Umschaltpause ist so kurz, dass der Stromregler, der die übliche PI-Charakteristik besitzt, trotz fehlendem Eingangssignal praktisch nicht merkbar weglaufen kann. Es kann daher unter Umständen sogar auf die bisher übliche Umschaltung des Stromreglers von PI-Charakteristik auf reine P-Charakteristik verzichtet werden. Die Umschaltpause wird praktisch nur noch durch die Schonzeit der verwendeten Thyristoren bestimmt.

**Patentansprüche**

1. Verfahren zum Herbeiführen dynamischer Zündwinkeltreue bei netzgeführten Stromrichtern mit Zündsteuergeräten, in denen aus dem Vergleich eines Steuersignals mit periodischen Hilfsspannungen kurze Zündimpulse erzeugt werden, die als Hauptimpulse die jeweils zugehörigen Thyristoren und als Nachimpulse gleichzeitig die jeweils zyklisch vorangehenden Thyristoren zünden, dadurch gekennzeichnet, dass die Bildung oder Weiterleitung der Nachimpulse dann gesperrt wird, wenn gleichzeitig mehr als ein Hauptimpuls gebildet wird.

2. Verfahren nach Anspruch 1, dadurch gekennzeichnet, dass die Bildung oder Weiterleitung der Nachimpulse dann gesperrt wird, wenn die Geschwindigkeit, mit der der Stromrichter in Richtung auf mehr Gleichrichterbetrieb gesteuert wird, einen Schwellwert übersteigt.

3. Verfahren nach Anspruch 1, dadurch gekennzeichnet, dass die Bildung oder Weiterleitung eines Hauptimpulses und des zugehörigen Nachimpulses dann gesperrt wird, wenn für den zyklisch nachfolgenden Thyristor gleichzeitig ein Hauptimpuls gebildet wird.

4. Verfahren nach Anspruch 1 oder 3, dadurch gekennzeichnet, dass zur Bildung des Sperrsignals (X) je zwei Hauptimpulse nach den Regeln der Kombinatorik einer UND-Verknüpfung unterzogen werden.

5. Verfahren nach Anspruch 1 oder 3, dadurch gekennzeichnet, dass zur Bildung des Sperrsignals (X) die Hauptimpulse amplitudenmässig summiert werden und dass die Summe mit einer Schwelle von der Grösse eines Hauptimpulses verglichen wird.

6. Verfahren nach Anspruch 2, dadurch gekennzeichnet, dass zur Bildung des Sperrsignales (X) das Steuersignal ($U_S$) des Stromrichters differenziert wird und dass das differenzierte Signal gleichgerichtet und mit einer festen Schwelle verglichen wird.

7. Schaltungsanordnung zur Durchführung des Verfahrens nach den Ansprüchen 1 oder 4, dadurch gekennzeichnet, dass im Zündsteuergerät in jedem, einem Thyristor (T1...T6) zugeordneten Zündkanal ein ODER-Gatter (01...06) und in der Verbindung zwischen jedem Zündkanal und dem ODER-Gatter des zyklisch vorangehenden Zündkanals ein UND-Gatter (U1...U6) mit Sperreingang vorgesehen ist, dass jeder Zündkanal nach den Regeln der Kombinatorik mit jedem anderen Zündkanal über ein UND-Gatter (U11...U25) verknüpft ist und dass die Ausgänge dieser UND-Gatter (U11...U25) über ein ODER-Gatter (011) mit den zusammengeschalteten Sperreingängen verbunden sind.

8. Schaltungsanordnung zur Durchführung des Verfahrens nach den Ansprüchen 2 oder 6, dadurch gekennzeichnet, dass im Zündsteuergerät in jedem einem Thyristor (T1...T6) zugeordneten Zündkanal ein ODER-Gatter (01...06) und in der Verbindung zwischen jedem Zündkanal und dem ODER-Gatter des zyklisch vorangehenden Zündkanals ein UND-Gatter (U1...U6) mit Sperreingang vorgesehen ist, dass zur Differenzierung des Steuersignals ($U_S'$) für die Steuerung des Stromrichters ein Differenzierglied (Dif) vorgesehen ist, dessen Ausgangsgrösse mittels Gleichrichter (D) so geformt wird, dass nur die Werte, die bei einer Steuerung des Stromrichters in Richtung auf mehr Gleichrichterbetrieb auftreten, an den Eingang eines Amplitudenkomparators (K) gelangen, dass der Ausgang des Komparators (K) über einen Impulsformer (IF) mit den zusammengeschalteten Sperreingängen verbunden ist und dass das Steuersignal ($U_S'$) über ein Verzögerungsglied (V) geführt ist.

9. Schaltungsanordnung zur Durchführung des Verfahrens nach den Ansprüchen 1 oder 5, dadurch gekennzeichnet, dass im Zündsteuergerät in jedem einem Thyristor (T1...T6) zugeordneten Zündkanal ein ODER-Gatter (01...06) und in der Verbindung zwischen jedem Zündkanal und dem ODER-Gatter des zyklisch vorangehenden Zündkanals ein UND-Gatter (U1...U6) mit Sperreingang vorgesehen ist, dass jeder Zündkanal an den Eingang eines summierenden Verstärkers geführt ist und dass der Ausgang des Verstärkers über einen Amplitudenkomparator, dessen Schwelle der Amplitude eines Zündimpulses entspricht, mit den zusammengeschalteten Sperr eingängen verbunden ist.

10. Schaltungsanordnung nach den Ansprüchen 7, 8 oder 9, dadurch gekennzeichnet, dass die in den Verbindungen zwischen jedem Zündkanal und dem zyklisch vorangehenden Zündkanal liegenden UND-Gatter (U1...U6) einen dritten Eingang besitzen und dass alle Zündkanäle auf ein ODER-Gatter (021) geführt sind, dessen Ausgang (Y) mit den zusammengeschalteten dritten Eingängen verbunden ist.

**Revendications**

1. Procédé pour établir la constance dynamique de l'angle d'amorçage dans les convertisseurs alimentés par secteur au moyen de blocs d'alimentation d'amorçage, dans lesquels la comparaison d'un signal d'attaque avec des tensions auxiliaires périodiques produit de courtes impulsions d'amorçage qui amorcent simultanément en tant qu'impulsions principales les thyristors respectivement correspondants et en tant que post-impulsions les thyristors respectifs qui précèdent cycliquement, caractérisé par le fait que la formation ou la transmission de la post-impulsion est arrêtée, si simultanément il se forme plus d'une impulsion principale.

2. Procédé selon la revendication 1, caractérisé en ce que la formation ou la transmission de la post-impulsion est arrêtée quand la vitesse à laquelle le convertisseur est commandé pour fonctionner davantage en redresseur excède une valeur de seuil.

3. Procédé selon la revendication 1, caractérisé en ce que la formation ou la transmission d'une impulsion principale et de la post-impulsion correspondante est arrêtée si simultanément une impulsion principale est formée pour le thyristor qui suit cycliquement.

4. Procédé selon la revendication 1 ou 3, caractérisé en ce que, pour la formation du signal d'arrêt (X), deux impulsions principales sont toujours soumises aux règles de la théorie des combinaisons d'une configuration «ET».

5. Procédé selon la revendication 1 ou 3, caractérisé en ce que pour la formation du signal d'arrêt (X), les impulsions principales sont additionnées en amplitude et que la somme est comparée à un seuil de la grandeur d'une impulsion principale.

6. Procédé selon la revendication 2, caractérisé par le fait que pour la formation du signal d'arrêt (X), le signal d'attache ($U_S$) du convertisseur est différentié et que le signal différentié est redressé et comparé à un seuil fixe.

7. Schéma de montage pour la mise en œuvre du procédé selon les revendications 1 ou 4, caractérisé en ce que dans le bloc d'alimentation d'amorçage sont prévues une porte «OU» (01...06), dans chaque canal d'amorçage affecté à un thyristor (T1...T6) et une porte «ET» (U1...U6) avec une entrée d'arrêt dans la liaison entre chaque canal d'amorçage et la prote «OU» du canal d'amorçage le précédant cycliquement, en ce que chaque canal d'amorçage est relié, selon la théorie des combinaisons, à chaque autre canal d'amorçage par une porte «ET» (U11...U25) et en ce que les sorties de cette porte «ET» (U11...U25) sont reliées par une porte «OU» (011) aux entrées d'arrêt couplées ensemble.

8. Schéma de montage pour la mise en œuvre du procédé selon les revendications 2 ou 6, caractérisé en ce que dans le bloc d'alimentation d'amorçage sont prévues une porte «OU» (01...06) dans chaque canal d'amorçage affecté à un thyristor (T1...T6) et une porte «ET» (U1...U6) avec une entrée d'arrêt dans la liaison entre chaque canal d'amorçage et la porte «OU» du canal d'amorçage le précédant cycliquement, en ce que pour la différentiation du signal de commande ($U_S'$) pour la commande du convertisseur un circuit différentié (Dif) est prévu dont la grandeur de sortie est modulée au moyen d'un redresseur (D) de telle sorte que seules arrivent à l'entrée d'un comparateur d'amplitude (K) les valeurs qui se produisent suite à une commande du convertisseur pour fonctionner davantage en redresseur, en ce que la sortie du comparateur (K) est reliée par un circuit de formation d'impulsions (IF) aux entrées d'arrêt couplées ensemble et en ce que le signal d'attaque ($U_S'$) est conduit par un dispositif de retard (V).

9. Schéma de montage pour la mise en œuvre du procédé selon les revendications 1 ou 5, caractérisé en ce que dans le bloc d'alimentation d'amorçage sont prévues une porte «OU» (01...06) dans chaque canal d'amorçage affecté à un thyristor (T1...T6) et une porte «ET» (U1...U6) avec une entrée d'arrêt dans la liaison entre chaque canal d'amorçage et la porte «OU» du canal d'amorçage le précédant cycliquement, en ce que chaque canal d'amorçage est conduit à l'entrée d'un répéteur de sommation et en ce que la sortie du répéteur est reliée aux entrées d'arrêt couplées ensemble au moyen d'un comparateur d'amplitude dont le seuil d'amplitude correspond à une impulsion d'amorçage.

10. Schéma de montage selon les revendications 7, 8 ou 9, caractérisé en ce que chacune des portes «ET» (U1...U6) placées dans les liaisons entre chaque canal d'amorçage et le canal d'amorçage précédant cycliquement possèdent une troisième entrée et tous les canaux d'amorçage sont conduits sur une porte «OU» (021) dont la sortie (Y) est reliée aux troisièmes entrées couplées ensemble.

**Claims**

1. Method for producing dynamic firing angle conformity in commutated converters comprising gate trigger control devices in which, from the comparison of a control signal with periodic auxiliary voltages, short gate pulses are generated which, as main pulses, trigger the respective associated thyristors and, as afterpulses, simultaneously trigger the respective cyclically preceding thyristors, characterised in that the forming or passing on of the afterpulses is blocked whenever simultaneously more than one main pulse is formed.

2. Method according to Claim 1, characterised in that the forming or passing on of the afterpulses is blocked whenever the speed, with which the converter is driven in the direction of more rectifier operation, exceeds a threshold value.

3. Method according to Claim 1, characterised in that the forming or passing on of a main pulse and the associated afterpulse is blocked whenever a main pulse is simultaneously formed for the cyclicly following thyristor.

4. Method according to Claim 1 or 3, characterised in that, for the purpose of forming the blocking signal (X), two main pulses each are subjected to a logical AND operation according to the rules of combinatorial analysis.

5. Method according to Claim 1 or 3, characterised in that, for the purpose of forming the blocking signal (X), the main pulse amplitudes are summed and that the sum is compared with a threshold of the magnitude of a main pulse.

6. Method according to Claim 2, characterised in that, for the purpose of forming the blocking signal (X), the control signal $(U_S)$ of the converter is differentiated and that the differentiated signal is rectified and compared with a fixed threshold.

7. Circuit arrangement for carrying out the method according to Claim 1 or 4, characterised in that in the gate trigger control device, in each triggering channel associated with one thyristor T1...T6), an OR gate (01...06) is provided and in the connection between each triggering channel and the OR gate of the cyclically preceding triggering channel, an AND gate (U1...U6) having an inhibiting input is provided, that each triggering channel is logically connected according to the rules of combinatorial analysis via an AND gate (U11...U25) to every other triggering channel and that the outputs of these AND gates (U11...U25) are connected via an OR gate (011) to the interconnected inhibiting inputs.

8. Circuit arrangement for carrying out the method according to Claim 2 or 6, characterised in that in the gate trigger control device, in each triggering channel associated with one thyristor (T1...T6), an OR gate (01...06) is provided and in the connection between each triggering channel and the OR gate of the cyclically preceding triggering channel, an AND gate (U1...U6) having an inhibiting input is provided, that for differentiating the control signal $(U_S')$ for converter control a differentiating circuit (Dif) is provided the output quantity of which is formed by means of a rectifier (D) in such a manner that only the values occurring when the converter is driven in the direction of more rectifier operation reach the input of an amplitude comparator (K), that the output of the comparator (K) is connected via a pulse shaping circuit (IF) to the interconnected inhibiting inputs and that the control signal $(U_S')$ is conducted via a delay circuit (V).

9. Circuit arrangement for carrying out the method according to Claims 1 or 5, cahracterised in that in the gate trigger control device, in each triggering channel associated with one thyristor (T1...T6), an OR gate (01...06) is provided and in the connection between each triggering channel and the OR gate of the cyclically preceding triggering channel, an AND gate (U1...U6) having an inhibiting input is provided, that each triggering channel is connected to the input of a summing amplifier and that the output of the amplifier is connected to the interconnected inhibiting inputs via an amplitude comparator the threshold of which corresponds to the amplitude of a gate pulse.

10. Circuit arrangement according to Claims 7, 8 or 9, characterised in that the AND gates (U1...U6) located in the connections between each triggering channel and the cyclically preceding triggering channel have a third input and that all triggering channels are connected to an OR gate (021), the output (Y) of which is connected to the interconnected third inputs.

Fig.1a

Fig.1b

Fig.1c

Fig.1d

# Fig.1e

$U_{AB}$

Fig.1f

Fig.1g

Fig.1h

Fig. 2

Fig. 3

Fig. 4

Dif

K

IF

$U_S'$

D

T

X

V

$U_S$

Fig. 5

021

1.1

2.1

3.1

4.1

5.1

6.1

$\geq 1$

Y

Fig. 6

21